# EUROPEAN PATENT SPECIFICATION

(11) **EP 1 942 737 B1**
(45) Date of publication and mention of the grant of the patent: **03.03.2010**
(21) Application number: 06807331.1
(22) Date of filing: 17.10.2006
(51) Int. Cl.: A01N 47/24, A01N 25/00

(54) **METHOD OF INDUCING RESISTANCE TO HARMFUL FUNGI**
VERFAHREN ZUR INDUKTION VON RESISTENZ GEGEN SCHADPILZE
PROCEDE D'INDUCTION DE RESISTANCE A DES CHAMPIGNONS NUISIBLES

(30) Priority: 28.10.2005 DE 102005052095; 28.07.2006 EP 06118106
(43) Date of publication of application: 16.07.2008
(73) Proprietor: BASF SE, 67056 Ludwigshafen (DE)
(72) Inventor: WATERHOUSE, Steve, Cheadle SK8 6QG (GB); STIERL, Reinhard, 67251 Freinsheim (DE); STAMMLER, Gerd, 69221 Dossenheim (DE)
(86) International application number: PCT/EP2006/067480
(87) International publication number: WO 2007/048735

(56) References cited:
- WO-A-01/82701
- WO-A-97/01277
- WO-A-98/29537
- WO-A-03/075663
- F.PASQUER ET AL.: "Specific patterns of changes in wheat gene expression after treatment with three antifungal compounds" PLANT MOLECULAR BIOLOGY, vol. 57, no. 5, March 2005 (2005-03), pages 693-707, XP002468642
- VENANCIO W S ET AL: "Physiological effects of strobilurin fungicides on plants" PUBLICATIO UEPG. CIENCIAS EXATAS E DA TERRA, CIENCIAS AGRARIAS E ENGENHARIA, UNIVERSIDADE ESTADUAL DE PONTA GROSSA, EDITORA, PONTA GROSSA, BR, vol. 9, no. 3, December 2003 (2003-12), pages 59-68, XP002462419 ISSN: 1676-8477
- HERMS A ET AL: "A Strobilurin Fungicide Enhances the Resistance of Tobacco against Tobacco Mosaic Virus and Pseudomonas syringae pv tabaci" PLANT PHYSIOLOGY, AMERICAN SOCIETY OF PLANT PHYSIOLOGISTS, ROCKVILLE, MD, US, vol. 130, September 2002 (2002-09), pages 120-127, XP002464317 ISSN: 0032-0889
- DATABASE CA [Online] CHEMICAL ABSTRACTS SERVICE, COLUMBUS, OHIO, US; R.STIERL ET AL.: "Activity of the new BASF strobilurin fungicide, BAS 500 F, against Septoria tritici on wheat" XP002468643 retrieved from STN-INTERNATIONAL Database accession no. 134:127181 & BCPC CONFERENCE--PESTS & DISEASES, vol. 3, 2000, pages 859-864,
- DATABASE CA [Online] CHEMICAL ABSTRACTS SERVICE, COLUMBUS, OHIO, US; R.STIERL ET AL.: "Activity of the new BASF strobilurin fungicide, BAS 500 F, against Plasmopara viticola on grapes" XP002468644 retrieved from STN-INTERNATIONAL Database accession no. 134:127200 & BCPC CONFERENCES--PESTS & DISEASES, vol. 1, 2000, pages 261-266,
- JASPERS M V: "Effect of fungicides, in vitro, on germination and growth of Phaeomoniella spp" PHYTOPATHOLOGIA MEDITERRANEA, EDIZIONI AGRICOLE, BOLOGNA,, IT, vol. 40, no. Suppl, 2001, pages S453-S458, XP009088408 ISSN: 0031-9465
- BARTLETT D W ET AL: "Review: the strobilurin fungicides" PEST MANAGEMENT SCIENCE, WILEY & SONS, BOGNOR REGIS, GB, vol. 58, 2002, pages 649-662, XP002447562 ISSN: 1526-498X

## Description

The present invention relates to a method of inducing plant tolerance to harmful fungi comprising the repeated application to the plants, the soil, in which the plant grows or is to be grown and/or the seeds of the plant, of an effective amount of an active compound that inhibits the mitochondrial breathing chain at the level of the b/c₁ complex.

The active compounds used according to the present invention can be applied to the plants, the seeds and/or the soils before or after sowing the plants or before or after emergence of the plants.

Practical experience in agriculture has demonstrated that the repeated use of certain active substances in the control of harmful fungi leads, in many cases, to the rapid selection of those fungal strains, which have developed a natural or adapted increased resistance to the active substance in question. In such a case, an effective control of these fungi with the active substance in question is no longer possible. These fungal strains are usually also cross-resistant to other active substances with the same mode of action. Active substances with different modes of action are required for controlling these fungal strains. However, there is no unlimited supply of active substances with novel modes of action. Finding novel modes of action is an ongoing objective on which research in the agrochemical industry focuses. The development of novel active substances without cross-resistance with known active substances is expensive and time-consuming.

WO9701277, WO9829537, WO03075663 and WO0182701 disclose methods of protecting plants by inducing certain resistances.

F.Pasquer et al. (Plant Molecular Biology (2005) 57, 693-707 and W.Venancio et al. (Publ.UEPG Ci. Exatas Terra, Ci. Agr. Eng., 9(3), 2003, 59-68) report about effects of strobilurine fungicides on plants.

As regards the spread of harmful fungi, it was an object of the present invention to find an efficient, widely applicable method by means of which the plants develop an increased resistance/tolerance to harmful fungi. This makes it possible to counteract the increased use of fungicides in agriculture.

Surprisingly, it has now been found that plants, having been treated with an active substance that inhibits the mitochondrial breathing chain at the level of the b/c₁ complex have an increased tolerance to harmful fungi.

"Induction of tolerance" in the sense of the present invention means that by application of the inventive method, a noticeably lower susceptibility of the treated plants to harmful fungi can be observed. Herein, this is also called "induction of resistance" in the plant to the respective harmful fungi.

Consequently, the plant that has been treated according to the present invention is less attacked by harmful fungi than a comparable plant that has not been subjected to the inventive method. In particular, the inventive method preferably results in at least 20 %, more preferably at least 30 %, even more preferably at least 40 %, still more preferred at least 50 %, still more preferred at least 60 %, still more preferred at least 70 %, most preferred at least 80 % less attack of harmful fungi than the respective control plant.

Active compounds that inhibit the mitochondrial breathing chain at the level of the b/c₁ complex are known as pesticides from the literature, wherein most of them are known as fungicides and/or insecticides [see for example Dechema-Monographien Bd. 129, 27-38, VCH Verlagsgemeinschaft Weinheim 1993; Natural Product Reports 1993, 565-574; Biochem. Soc. Trans. 22, 635 (1993)]. However, there has been no suggestion to date that such active compounds can effectively be used for inducing resistance in plants towards harmful fungi, which has only been found within the framework of the present invention.

A particularly important class of active compounds that inhibit the mitochondrial breathing chain at the level of the b/c₁ complex useful according to the present invention are strobilurins. Strobilurins are generally known as pesticides since a long time and have particularly been described as fungicides and, in some cases, also as insecticides and are for example widely used for combating various fungal pathogens (EP-A 178 826; EP-A 253 213; WO 93/15046; WO 95/18789; WO 95/21153; WO 95/21154; WO 95/24396; WO 96/01256; WO 97/15552; WO 97/27189). A further example of an active compound that inhibits the mitochondrial breathing chain at the level of the b/c₁ complex is famoxadone (5-methyl-5-(4-phenoxyphenyl)-3-(phenylamino)-2,4-oxazolidinedione).

Specific examples for suitable strobilurins for use in the present invention are strobilurin compounds of the formula I 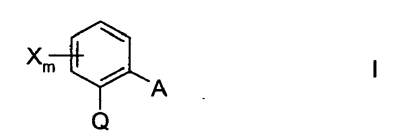 where the substituents and indices have the following meanings:
- X: denotes halogen, C₁-C₄-alkyl or trifluoromethyl;
- m: denotes 0 or 1;
- Q: denotes C(=CH-CH₃)-COOCH₃, C(=CH-OCH₃)-COOCH₃, C(=N-OCH₃)-CONHCH₃, C(=N-OCH₃)-COOCH₃ , N(-OCH₃)-COOCH₃, or a group Q1 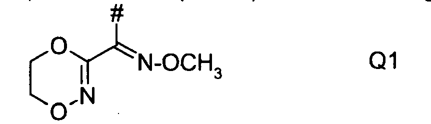 where # denotes the point of linkage to the phenyl ring;
- A: denotes -O-B, -CH₂O-B, -OCH₂-B, -CH₂S-B, -CH=CH-B, -C=C-B, -CH₂O-N=C(R¹)-B, -CH₂S-N=C(R¹)-B, -CH₂O-N=C(R¹)-CH=CH-B, or -CH₂O-N=C(R¹)-C(R²)=N-OR³; where B has the following meanings:
B denotes phenyl, naphthyl, 5- or 6-membered heteroaryl or 5- or 6-membered heterocyclyl, comprising one, two or three N atoms and/or one O or S atom or one or two O and/or S atoms, the ring systems being unsubstituted or substituted by one, two or three identical or different groups R^{a}_{:}
R^{a} denotes cyano, nitro, amino, aminocarbonyl, aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylsuffinyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkyl-amino, di-C₁-C₆-alkylamino, C₁-C₆-alkylaminocarbonyl, di-C₁-C₆-alkyl-aminocarbonyl, C₁-C₆-alkylaminothiocarbonyl, di-C₁-C₆-alkylamino-thiocarbonyl, C₂-C₆-alkenyl, C₂-C₆-alkenyloxy, phenyl, phenoxy, benzyl, benzyloxy, 5- or 6-membered heterocyclyl, 5- or 6-membered heteroaryl, 5- or 6-membered heteroaryloxy, C(=NORa)-R^{b} or OC(R^{a})₂-C(R^{b})=NOR^{b},
the cyclic radicals, in turn, being unsubstituted or substituted by one, two or three identical or different groups R^{b}:
R^{b} denotes cyano, nitro, halogen, amino, aminocarbonyl, amino-thiocarbonyl, C₁-C₆-alkyl, C₁-C₆-haloalkyl, C₁-C₆-alkylsulfonyl, C₁-C₆-alkylsulfinyl, C₃-C₆-cycloalkyl, C₁-C₆-alkoxy, C₁-C₆-halo-alkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkyl-aminocarbonyl, C₁-C₆-alkylaminothiocarbonyl, di-C₁-C₆-alkyl-aminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered heteroaryl, 5- or 6-membered heteroaryloxy or C(=NOR^{A})-RB; where
R^{A}, R^{B} denote hydrogen or C₁-C₆-alkyl;
R¹ denotes hydrogen, cyano, C₁-C₄-alkyl, C₁-C₄-haloalkyl, C₃-C₆-Cycloalkyl, C₁-C₄-alkoxy, or C₁-C₄-alkylthio;
R² denotes phenyl, phenylcarbonyl, phenylsulfonyl, 5- or 6-membered heteroaryl, 5- or 6-membered heteroarylcarbonyl or 5- or 6-membered heteroarylsulfonyl, the ring systems being unsubstituted or substituted by one, two or three identical or different radicals R^{a},
C₁-C₁₀-alkyl, C₃-C₆-cycloalkyl, C₂-C₁₀-alkenyl, C₂-C₁₀-alkynyl, C₁-C₁₀-alkyl-carbonyl, C₂-C₁₀-alkenylcarbonyl, C₃-C₁₀-alkynylcarbonyl, C₁-C₁₀-alkyl-sulfonyl, or C(=NOR^{A})-R^{B}, the hydrocarbon radicals of these groups being unsubstituted or substituted by one, two or three identical or different radicals R^{c}:
R^{c} denotes cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkyl-sulfinyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylamino-carbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy,
C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered heteroaryl, 5- or 6-membered heteroaryloxy and heteroarylthio, it being possible for the cyclic groups, in turn, to be partially or fully halogenated and/or to have attached to them one, two or three identical or different radicals R^{a}; and
R³ denotes hydrogen, C₁-C₆-alkyl, C₂-C₆-alkenyl, C₂-C₆-alkynyl, the hydrocarbon radicals of these groups being unsubstituted or substituted by one, two or three identical or different radicals R^{c}; or an agriculturally acceptable salt thereof; and
the strobilurin compounds selected from the group consisting of methyl (2-chloro-5-[1-(3-methylbenzyloxyimino)ethyl]benzyl)carbamate and methyl (2-chloro-5-[1-(6-methylpyridin-2-ylmethoxyimino)ethyl]benzyl)carbamate and the agriculturally acceptable salts thereof.

According to the present invention, agriculturally acceptable salts include in particular the salts of those cations or the acid addition salts of those acids whose cations and anions, respectively, have no adverse effect on the action of the compounds used according to the invention.

Thus, suitable cations are in particular the ions of the alkali metals, preferably sodium and potassium, of the alkaline earth metals, preferably calcium, magnesium and barium, and of the transition metals, preferably manganese, copper, zinc and iron, and also the ammonium ion which, if desired, may bear from one to four (C₁-C₄)-alkyl substituents and/or one phenyl or benzyl substituent, preferably diisopropylammonium, tetramethylammonium, tetrabutylammonium, trimethylbenzylammonium, and also phosphonium ions, sulfonium ions, preferably tri(C₁-C₄-alkyl)sulfonium, and sulfoxonium ions, preferably tri(C₁-C₄-alkyl)sulfoxonium.

Anions of acid addition salts which can be employed advantageously are, for example, chloride, bromide, fluoride, hydrogen sulfate, sulfate, dihydrogenphosphate, hydrogenphosphate, phosphate, nitrate, bicarbonate, carbonate, hexafluorosilicate, hexafluorophosphate, benzoate, and also the anions of (C₁-C₄)-alkanoic acids, preferably formate, acetate, propionate and butyrate. They can be formed by reaction of the compounds used according to the invention with an acid of the corresponding anion, preferably hydrochloric acid, hydrobromic acid, sulfuric acid, phosphoric acid or nitric acid. Particularly preferred according to the present invention are strobilurins selected from azoxystrobin, dimoxystrobin, enestroburin, fluoxastrobin, kresoxim-methyl, metominostrobin, picoxystrobin, pyraclostrobin, trifloxystrobin, orysastrobin, methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate and methyl 2-(ortho(2,5-dimethylphenyl-oxymethylene)phenyl)-3-methoxyacrylate. Among these, it may be preferred according to the present invention to use a strobilurin selected from azoxystrobin, dimoxystrobin, enestroburin, fluoxastrobin, kresoxim-methyl, metominostrobin, picoxystrobin, pyraclostrobin, trifloxystrobin and orysastrobin.

Also particularly suitable for the use according to the invention are in particular the compounds listed in the tables below.

**Table I**

| | | | | | |
|---|---|---|---|---|---|
| 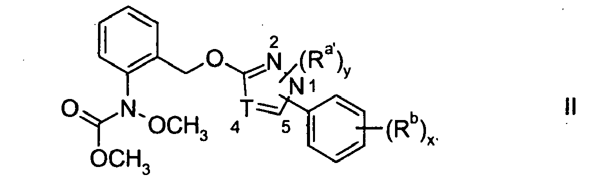 | | | | | |

| No. | T | (R^{a'})_{y} | Position of the group phenyl-(R^{b})ₓ | (R^{b})ₓ | Reference |
|---|---|---|---|---|---|
| I-1 | N | - | 1 | 2,4-Cl₂ | WO 96/01256 |
| I-2 | N | - | 1 | 4-Cl | WO 96/01256 |
| I-3 | CH | - | 1 | 2-Cl | WO 96/01256 |
| I-4 | CH | - | 1 | 3-Cl | WO 96/01256 |
| I-5 | CH | - | 1 | 4-Cl | WO 96/01256 |
| I-6 | CH | - | 1 | 4-CH₃ | WO 96/01256 |
| I-7 | CH | - | 1 | H | WO 96/01256 |
| I-8 | CH | - | 1 | 3-CH₃ | WO 96/01256 |
| I-9 | CH | 5-CH₃ | 1 | 3-CF₃ | WO 96/01256 |
| I-10 | CH | 1-CH₃ | 5 | 3-CF₃ | WO 99/33812 |
| I-11 | CH | 1-CH₃ | 5 | 4-Cl | WO 99/33812 |
| I-12 | CH | 1-CH₃ | 5 | - | WO 99/33812 |

**Table II**

| | | | | |
|---|---|---|---|---|
| 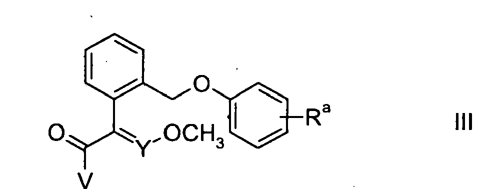 | | | | |

| No. | V | Y | R^{a} | Reference |
|---|---|---|---|---|
| II-1 | OCH₃ | N | 2-CH₃ | EP-A 253 213 |
| II-2 | OCH₃ | N | 2,5-(CH₃)₂ | EP-A 253 213 |
| II-3 | NHCH₃ | N | 2,5-(CH₃)₂ | EP-A 477 631 |
| II-4 | NHCH₃ | N | 2-Cl | EP-A 398 692 |
| II-5 | NHCH₃ | N | 2-CH₃ | EP-A 398 692 |
| II-6 | NHCH₃ | N | 2-CH₃, 4-OCF₃ | EP-A 628 540 |
| II-7 | NHCH₃ | N | 2-Cl, 4-OCF₃ | EP-A 628 540 |
| II-8 | NHCH₃ | N | 2-CH₃, 4-OCH(CH₃)-C(CH₃)=NOCH₃ | EP-A 11 18 609 |
| II-9 | NHCH₃ | N | 2-Cl, 4-OCH(CH₃)-C(CH₃)=NOCH₃ | EP-A 11 18 609 |
| II-10 | NHCH₃ | N | 2-CH₃, 4-OCH(CH₃)-C(CH₂CH₃)=NOCH₃ | EP-A 11 18 609 |
| II-11 | OCH₃ | CH | 2,5-(CH₃)₂ | EP-A 226 917 |

**Table III**

| | | | | | |
|---|---|---|---|---|---|
| 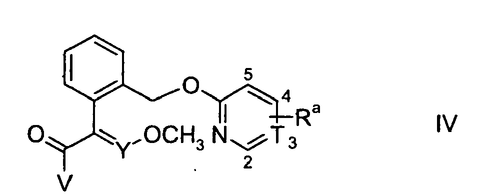 | | | | | |

| No. | V | Y | T | R^{a} | Reference |
|---|---|---|---|---|---|
| III-1 | OCH₃ | CH | N | 2-OCH₃, 4-CF₃ | WO 96/16047 |
| III-2 | OCH₃ | CH | N | 2-OCH(CH₃)₂, 4-CF₃ | WO 96/16047 |
| III-3 | OCH₃ | CH | CH | 2-CF₃ | EP-A 278 595 |
| III-4 | OCH₃ | CH | CH | 4-CF₃ | EP-A 278595 |
| III-5 | NHCH₃ | N | CH | 2-Cl | EP-A 398 692 |
| III-6 | NHCH₃ | N | CH | 2-CF₃ | EP-A 398 692 |
| III-7 | NHCH₃ | N | CH | 2-CF₃, 4-Cl | EP-A 398 692 |
| III-8 | NHCH₃ | N | CH | 2-Cl, 4-CF₃ | EP-A 398 692 |

**Table IV**

| | | | | | |
|---|---|---|---|---|---|
| 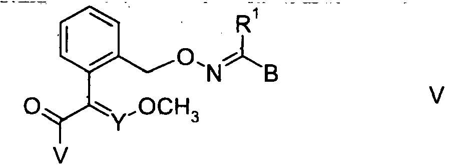 | | | | | |

| No. | V | Y | R¹ | B | Reference |
|---|---|---|---|---|---|
| IV-1 | OCH₃ | CH | CH₃ | (3-CF₃)C₆H₄ | EP-A 370 629 |
| IV-2 | OCH₃ | CH | CH₃ | (3,5-Cl₂)C₆H₃ | EP-A 370 629 |
| IV-3 | NHCH₃ | N | CH₃ | (3-CF₃)C₆H₄ | WO 92/13830 |
| IV-4 | NHCH₃ | N | CH₃ | (3-OCF₃)C₆H₄ | WO 92/13830 |
| IV-5 | OCH₃ | N | CH₃ | (3-OCF₃)C₆H₄ | EP-A 460 575 |
| IV-6 | OCH₃ | N | CH₃ | (3-CF₃)C₆H₄ | EP-A 460 575 |
| IV-7 | OCH₃ | N | CH₃ | (3,4-Cl₂)C₆H₃ | EP-A 460 575 |
| IV-8 | OCH₃ | N | CH₃ | (3,5-Cl₂)C₆H₃ | EP-A 463 488 |
| IV-9 | OCH₃ | CH | CH₃ | CH=CH-(4-Cl)C₆H₄ | EP-A 936 213 |

**Table V**

| | | | | | |
|---|---|---|---|---|---|
| 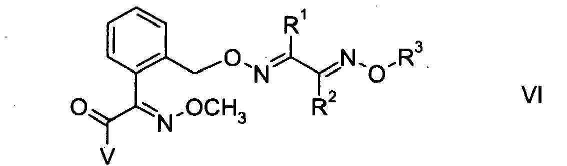 | | | | | |

| No. | V | R¹ | R² | R³ | Reference |
|---|---|---|---|---|---|
| V-1 | OCH₃ | CH₃ | CH₃ | CH₃ | WO 95/18789 |
| V-2 | OCH₃ | CH₃ | CH(CH₃)₂ | CH₃ | WO 95/18789 |
| V-3 | OCH₃ | CH₃ | CH₂CH₃ | CH₃ | WO 95/18789 |
| V-4 | NHCH₃ | CH₃ | CH₃ | CH₃ | WO 95/18789 |
| V-5 | NHCH₃ | CH₃ | 4-F-C₆H₄ | CH₃ | WO 95/18789 |
| V-6 | NHCH₃ | CH₃ | 4-Cl-C₆H₄ | CH₃ | WO 95/18789 |
| V-7 | NHCH₃ | CH₃ | 2,4-C₆H₃ | CH₃ | WO 95/18789 |
| V-8 | NHCH₃ | Cl | 4-F-C₆H₄ | CH₃ | WO 98/38857 |
| V-9 | NHCH₃ | Cl | 4-Cl-C₆H₄ | CH₂CH₃ | WO 98/38857 |
| V-10 | NHCH₃ | CH₃ | CH₂C(=CH₂)CH₃ | CH₃ | WO 97/05103 |
| V-11 | NHCH₃ | CH₃ | CH=C(CH₃)₂ | CH₃ | WO 97/05103 |
| V-12 | NHCH₃ | CH₃ | CH=C(CH₃)₂ | CH₂CH₃ | WO 97/05103 |
| V-13 | NHCH₃ | CH₃ | CH=C(CH₃)CH₂CH₃ | CH₃ | WO 97/05103 |
| V-14 | NHGH₃ | CH₃ | O-CH(CH₃)₂ | CH₃ | WO-9-7-/06133 |
| V-15 | NHCH₃ | CH₃ | O-CH₂CH(CH₃)₂ | CH₃ | WO 97/06133 |
| V-16 | NHCH₃ | CH₃ | C(CH₃)=NOCH₃ | CH₃ | WO 97/15552 |

**Table VI**

| | | | | |
|---|---|---|---|---|
| 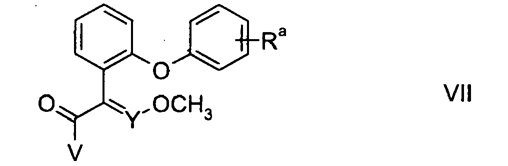 | | | | |

| No. | V | Y | R^{a} | Reference |
|---|---|---|---|---|
| VI-1 | NHCH₃ | N | H | EP-A 398 692 |
| VI-2 | NHCH₃ | N | 3-CH₃ | EP-A 398 692 |
| VI-3 | NHCH₃ | N | 2-NO₂ | EP-A 398 692 |
| VI-4 | NHCH₃ | N | 4-NO₂ | EP-A 398 692 |
| VI-5 | NHCH₃ | N | 4-Cl | EP-A 398 692 |
| VI-6 | NHCH₃ | N | 4-Br | EP-A 398 692 |

**Table VII**

| | | | |
|---|---|---|---|
| 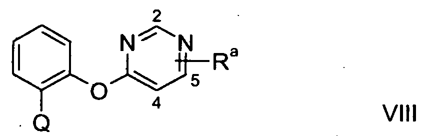 | | | |

| No. | Q | R^{a} | Reference |
|---|---|---|---|
| VII-1 | C(=CH-OCH₃)COOCH₃ | 5-O-(2-CN-C₆H₄) | EP-A 382 375 |
| VII-2 | C(=CH-OCH₃)COOCH₃ | 5-O-(2-Cl-C₆H₄) | EP-A 382 375 |
| VII-3 | C(=CH-OCH₃)COOCH₃ | 5-O-(2-CH₃-C₆H₄) | EP-A 382 375 |
| VII-4 | C(=N-OCH₃)CONHCH₃ | 5-O-(2-Cl-C₆H₄) | GB-A 2253624 |
| VII-5 | C(=N-OCH₃)CONHCH₃ | 5-O-(2,4-Cl₂-C₆H₃) | GB-A 2253624 |
| VII-6 | C(=N-OCH₃)CONHCH₃₃ | 5-O-(2-CH₃-C₆H₄) | GB-A 2253624 |
| VII-7 | C(=N-OCH₃)CONHCH₃ | 5-O-(2-CH₃,3-Cl-C₆H₃) | GB-A 2253624 |
| VII-8 | C(=N-OCH₃)CONHCH₃ | 4-F, 5-O-(2-CH₃-C₆H₄) | WO 98/21189 |
| VII-9 | C(=N-OCH₃)CONHCH₃ | 4-F, 5-O-(2-Cl-C₆H₄) | WO 98/21189 |
| VII-10 | C(=N-OCH₃)CONHCH₃ | 4-F,5-O-(2-CH₃,3-Cl-C₆H₃) | WO 98/21189 |
| VII-11 | Q1 | 4-F, 5-O-(2-Cl-C₆H₄) | WO 97/27189 |
| VII-12 | Q1 | 4-F, 5-O-(2-CH₃,3-Cl-C₆H₃) | WO 97/27189 |
| VII-13 | Q1 | 4-F, 5-O-(2,4-Cl₂-C₆H₃) | WO 97/27189 |

Also particularly preferred for the use according to the invention are the commercially available active strobilurin compounds. Particular preference is given to the following active compounds of the tables above: compound I-5 (pyraclostrobin), II-1 (kresoxim-methyl), II-3 (dimoxystrobin), II-11 (ZJ 0712), III-3 (picoxystrobin), IV-6 (trifloxystrobin), IV-9 (enestroburin), V-16 (orysastrobin), VI-1 (metominostrobin), VII-1 (azoxystrobin) and VII-11 (fluoxastrobin). A further compound of formula I that is useful is fluacrypyrim (methyl (E)-2-{α-[2-isopropoxy-6-(trifluoromethyl)pyrimidin-4-yloxy]-o-tolyl}-3-methoxyacrylate).

The method according to the present invention is particularly suitable for inducing tolerance to the below mentioned harmful fungi:
- Alternaria species on vegetables, oilseed rape, sugar beet and fruit and rice, such as, for example, A. solani or A. alternata on potatoes and tomatoes;
- Aphanomyces species on sugar beet and vegetables;
- Ascochyta species on cereals and vegetables;
- Bipolaris and Drechslera species on corn, cereals, rice and lawns, such as, for example, D. maydis on corn;
- Blumeria graminis (powdery mildew) on cereals;
- Botrytis cinerea (gray mold) on strawberries, vegetables, flowers and grapevines;
- Bremia lactucae on lettuce;
- Cercospora species on corn, soybeans, rice and sugar beet;
- Cochliobolus species on corn, cereals, rice, such as, for example Cochliobolus sativus on cereals, Cochliobolus miyabeanus on rice;
- Colletotricum species on soybeans and cotton;
- Drechslera species, Pyrenophora species on corn, cereals, rice and lawns, such as, for example, D. teres on barley or D. tritici-repentis on wheat;
- Elsinoe ampelina on grapevines
- Esca on grapevines, caused by Phaeoacremonium chlamydosporium, Ph. Aleophilum and Formitipora punctata (syn. Phellinus punctatus);
- Exserohilum species on corn;
- Erysiphe cichoracearum and Sphaerotheca fuliginea on cucumbers;
- Fusarium and Verticillium species on various plants, such as, for example, F graminearum or F. culmorum on cereals or F. oxysporum on a multitude of plants, such as, for example, tomatoes;
- Gaeumanomyces graminis on cereals;
- Gibberella species on cereals and rice (for example Gibberella fujikuroi on rice);
- Glomerella cingulata on grapevines;
- Grainstaining complex on rice;
- Helminthosporium species on corn and rice;
- Isariopsis clavispora on grapevines;
- Michrodochium nivale on cereals;
- Mycosphaerella species on cereals, bananas and groundnuts, such as, for example, M. graminicola on wheat or M.fijiensis on bananas;
- Peronospora species on cabbage and bulbous plants, such as, for example, P. brassicae on cabbage or P. destructor on onions;
- Phakopsara pachyrhizi and Phakopsara meibomiae on soybeans;
- Phomopsis species on soybeans and sunflowers;
- Phomopsis viticola on grapevines;
- Phytophthora infestans on potatoes and tomatoes;
- Phytophthora species on various plants, such as, for example, P. capsici on bell pepper;
- Plasmopora viticola on grapevines;
- Podosphaera leucotricha on apples;
- Pseudocercosporella herpotrichoides on cereals;
- Pseudoperonospora on various plants, such as, for example, P. cubensis on cucumber or P. humili on hops;
- Pseudopeziculla tracheiphila on grapevines;
- Puccinia species on various plants, such as, for example, P. triticina, P. striformins, P. hordei or P. graminis on cereals or P. asparagi on asparagus;
- Pyricularia oryzae, Corticium sasakii, Sarocladium oryzae, S.attenuatum, Entyloma oryzae on rice;
- Pyricularia grisea on lawns and cereals;
- Pythium spp. on lawns, rice, corn, cotton, oilseed rape, sunflowers, sugar beet, vegetables and other plants, such as, for example, P. ultiumum on various plants, P. aphanidermatum on lawns;
- Guignardia bidwelli on grapevines;
- Rhizoctonia species on cotton, rice, potatoes, lawns, corn, oilseed rape, potatoes, sugar beet, vegetables and on various plants, such as, for example, R. solani on beet and various plants;
- Rhynchosporium secalis on barley, rye and triticale;
- Sclerotinia species on oilseed rape and sunflowers;
- Septoria tritici and Stagonospora nodorum on wheat;
- Erysiphe (syn. Uncinula) necator on grapevines;
- Setospaeria species on corn and lawns;
- Sphacelotheca reilinia on corn;
- Thievaliopsis species on soybeans and cotton;
- Tilletia species on cereals;
- Ustilago species on cereals, corn and sugar cane, such as, for example, U. maydis on corn;
- Venturia species (scab) on apples and pears, such as, for example, V. inaequalis on apples.

The method according to the invention is also preferably suitable for controlling strains of harmful fungi, which have developed an increased tolerance to active substances of the strobilurin type, in particular for the control of Septoria species such as Septoria tritici.

The method is applied by repeatedly treating the plants, the soil and/or the seeds of the plant with an effective amount of the active compound used according to the present invention, in particular of a compound of the formula I. The application can be effected both before (protective induction of tolerance to fungal attack) and after (induction of tolerance in order to restrict fungal growth and related plant damage against future fungal attack) the infection of the plants, of the soil and/or the seeds of the plant by the fungi.

In a preferred embodiment of the inventive method, the active substance used according to the present invention, in particular the compound of the formula I, is applied protectively, leading to an increased tolerance of the respective plant towards harmful fungi attack.

In a further preferred embodiment of the inventive method, the treatment of the plants with the active substance, particularly with a compound of the formula I, is carried out during the first six weeks, in particular during the first four weeks, of the vegetation period of the plants or after emergence of the plants, substantially before the first protective applications of fungicides are carried out. It can be particularly preferred that the first application is carried out during the first six, particularly during the first four weeks of the vegetation period of the plant to be rendered resistant against fungal attack.

It is usually preferred according to the present invention to treat the plants before the attack, in particular more than one week before the attack by harmful fungi. During this time, up to 10 treatments with the active substance, particularly with a compound of the formula I, are carried out. A noticeably lower susceptibility of the plants to harmful fungi can be observed.

In the case of vegetables and field crops, such as soybeans, cotton, tobacco, beans, peas and cereals, such as maize, wheat, barley, it can be preferred to apply the active substance shortly after emergence of the plant, preferably during the first four weeks after emergence, or as a seed treatment. It is preferred to treat the plants twice to five times, in particular twice to three times.

In the case of fruit and other perennial plants, the treatment is preferably carried out during the first six, preferably the first four, weeks of the vegetation period. It is preferred to carry out two to five treatments.

The invention is carried out by a repeated application of the active compound used according to the present invention, in particular of the compound of formula I. In general, the best effect can be observed when the treatment is repeated every 10 to 20 days.

According to a further preferred embodiment of the invention, two to ten applications of the active compound used according to the present invention, particularly of a compound of the formula I, are carried out over one season.

According to the present invention, the first application is preferably carried out before the beginning of the vegetation period, which may be in particular useful if the inventive method is carried out on vegetables or field crops like, for example, winter wheat.

According to one embodiment of the present invention, the inventive method is preferably carried out as a foliar application. This can be particularly preferred in the case of field crops and vegetables, such as potatoes, tomatoes, cucumbers, onions and lettuce. It can be preferred to carry out up to 10 treatments.

According to one embodiment of the invention, the inventive method is carried out on vegetables or field crops. Particularly, in this embodiment, more than two and up to ten applications of the active compound used according to the present invention, particularly a compound of the formula I, are carried out.

According to still another embodiment of the invention, the inventive method is carried out on soybeans, maize (corn), cotton, tobacco, french beans, wheat, rye and peas.

According to still another embodiment of the invention, the inventive method is carried out on cereals, particularly on wheat.

According to another embodiment, by means of the inventive method tolerance to Septoria spp. is induced in the plants, particularly in wheat. More particularly, tolerance to Septoria tritici is induced thereby.

According to another embodiment of the invention, the method for inducing tolerance is carried out on perennial plants. One specific example therefor is the use of the inventive method on grapevines.

According to another embodiment, by means of the inventive method resistance to Botrytis cinerea, Plasmopara viticola, Erysiphe necator and/or Esca is induced in the plants, particularly in grapevines. More particularly, resistance to Esca is induced thereby.

Esca stands for a complex of fungi pathogens. The pathogens that can be associated with Esca symptoms according to the literature are Fomitiporia punctata (syn. Phellinus punctatus), Fomitiporia mediterrana, Phaeroacremonium spp.: Phaeroacremonium aleophilum and Phaemoniella chlamydosporum. The grapevine can be attacked by one, by several or even all of the pathogens that can be associated with Esca. One particular fungus, which was isolated from the wood of Esca attacked grapevines, is Phaemoniella chlamydosporum (white rot fungi). There is known an acute form and a chronic form of the Esca disease and Esca can lead to different symptoms. The symptoms of the chronic form of the Esca disease are, for example, light green spots on the leaves and dark blotches on the berries. Further, the woody parts inside the grapevines often transform into a soft and spongy material, which is mostly observed in older grapevines. A grapevine suffering from the acute form of Esca abruptly begins to welt and ultimately withers and dies. Surprisingly, it has now been found that using the inventive method, grapevines can be rendered tolerant against Esca, providing an effective means for avoiding Esca attacks at the grapevine.

According to still another embodiment, by means of the inventive method resistance to Plasmopora viticola, Uncinula necator, Guignardia bidwelli, Pseudopeziculla tracheiphila, Phomopsis viticola, Elsinoe ampelina, Glomerella cingulata, Isariopsis clavispora and/or Botrytis cinerea is induced in the plants, particularly in grapevines.

Furthermore, according to another embodiment of the invention, the active compound, particularly a compound of the formula I, or the respective mixture or formulation containing the same, is taken up by the plants and/or the seeds of the plant during the first six weeks of the vegetation period of the plants or the germination of the seeds. Depending on the severity of the infection and the nature of the desired effect, the application rates of the active substance are, upon application, between 1 and 1000 g, preferably 20 to 750 g, of active substance per ha.

The compositions, which comprise the active substance, particularly a compound of the formula I, generally comprise between 0.1 and 95, preferably between 0.5 and 90, % by weight of active substance.

Usually, the application rates are between 0.01 and 2.0 kg of active substance per ha, depending on the nature of the desired effect.

In the case of the treatment of seed, for example by dusting, coating or soaking seed, amounts of active substance of from 1 to 1000 g/100 kg, preferably 5 to 100 g/100 kg of seed, are generally required.

The active compounds used according to the present invention, particularly the compounds of formula I, can be converted into the customary formulations, for example solutions, emulsions, suspensions, dusts, powders, pastes and granules. The use form depends on the intended purpose; in any case, it should ensure a fine and uniform distribution of the compound used according to the invention.

The formulations are prepared in a known manner, for example by extending the active substance with solvents and/or carriers, if desired using emulsifiers and dispersants. Suitable solvents/adjuvants are essentially:
- water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethyl amides, fatty acids and fatty acid esters. In principle, solvent mixtures may also be used;
- carriers, such as ground natural minerals (for example kaolins, argillaceous earths, talc, chalk) and ground synthetic minerals (for example highly disperse silica, silicates); emulsifiers such as nonionic and anionic emulsifiers (for example polyoxyethylene fatty alcohol ethers, alkylsulfonates and arylsulfonates) and dispersants such as lignin-sulfite waste liquors and methylcellulose.

Suitable surface-active substances are alkali metal, alkaline earth metal and ammonium alts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristyrylphenyl polyglycol ether, alkylaryl polyether alcohols, condensates of alcohol or fatty alcohol with ethylene oxide, ethoxylated castor oil, polyoxyethylene alkyl ethers, ethoxylated polyoxypropylene, lauryl alcohol polyglycol ether acetal, sorbitol esters, lignin-sulfite waste liquors and methylcellulose.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable and animal origin, aliphatic, cycloaliphatic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, strongly polar solvents, for example dimethyl sulfoxide, N-methylpyrrolidone or water.

Powders, materials for broadcasting and dusts can be prepared by mixing or concomitantly grinding the active substances together with a solid carrier.

Granules, for example coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers such as, for example, ammonium sulfate, ammonium phosphate, ammonium nitrate, ureas, and products of vegetable origin, such as cereal meal, tree bark meal, wood meal and nutshell meal, cellulose powders and other solid carriers.

Formulations for the treatment of seed may additionally comprise binders and/or gellants and, if appropriate, colorants.

Binders can be added in order to increase the adherence of the active substances on the seed after the treatment. Examples of suitable binders are EO/PO block copolymer surfactants, but also polyvinyl alcohols, polyvinylpyrrolidones, polyacrylates, polymethacrylates, polybutenes, polyisobutylenes, polystyrenes, polyethylenamines, polyethylenamides, polyethylenimines (Lupasol®, Polymin®), polyethers, polyurethanes, polyvinyl acetates, tylose, and copolymers of these polymers. A suitable gellant is, for example, carrageenan (Satiagel®).

In general, the formulations comprise between 0.01 and 95% by weight, preferably between 0.1 and 90% by weight, of the active substance. In this context, the active substances are employed in a purity of from 90% to 100%, preferably 95% to 100% (according to NMR spectrum).

The active substance concentrations in the ready-to-use preparations can be varied within substantial ranges. In general, they are between 0.0001 and 10%, preferably between 0.01 and 1%.

The active substances can also be used successfully in the ultra-low-volume (ULV) method, it being possible to apply formulations with more than 95% by weight of active substance, or indeed the active substance without additions.

For the treatment of seed, the formulations in question are diluted twice to ten-fold and then give active substance concentrations of from 0.01 to 60% by weight, preferably 0.1 to 40% by weight, in the ready-to-use preparations.

The following are examples of formulations according to the invention:
1. Products for dilution with water
   A Water-soluble concentrates (SL, LS)
      10 parts by weight of a compound used according to the invention are dissolved using 90 parts by weight of water or a water-soluble solvent. As an alternative, wetters or other auxiliaries are added. The active ingredient dissolves upon dilution with water. This gives a formulation with an active substance content of 10%.
   B Dispersible concentrates (DC)
      20 parts by weight of a compound used according to the invention are dissolved in 70 parts by weight of cyclohexanone with addition of 10 parts by weight of a dispersant, for example polyvinylpyrrolidone. Dilution with water gives a dispersion. The active substance content is 20% by weight.
   C Emulsifiable concentrates (EC)
      15 parts by weight of a compound used according to the invention are dissolved in 75 parts by weight of xylene with addition of calcium dodecylbenzenesulfonate and castor oil ethoxylate (in each case 5 parts by weight). Dilution with water gives an emulsion. The formulation has an active substance content of 15%.
   D Emulsions (EW, EO, ES)
      25 parts by weight of a compound used according to the invention are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (Ultraturrax, for example) and made into a homogeneous emulsion. Dilution with water gives an emulsion. The formulation has an active substance content of 25%.
   E Suspensions (SC, OD, FS)
      In an agitated ball mill, 20 parts by weight of a compound used according to the invention are comminuted with addition of 10 parts by weight of dispersants and wetters and 70 parts by weight of water or an organic solvent to give a fine active ingredient suspension. Dilution with water gives a stable suspension of the active ingredient. The active substance content in the formulation is 20% by weight.
   F Water-dispersible granules and water-soluble granules (WG, SG)
      50 parts by weight of a compound used according to the invention are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active ingredient. The formulation has an active substance content of 50% by weight.
   G Water-dispersible powders and water-soluble powders (WP, SP, SS, WS)
      75 parts by weight of a compound used according to the invention are ground in a rotor-stator mill with addition of 25 parts by weight of dispersants and wetters and also silica gel. Dilution with water gives a stable dispersion or solution of the active ingredient. The active substance content in the formulation is 75% by weight.
   H Gel formulations
      In a ball mill, 20 parts by weight of a compound used according to the invention, 10 parts by weight of dispersant, 1 part by weight of gellant and 70 parts by weight of water or of an organic solvent are ground to give a fine suspension. Dilution with water gives a stable suspension with an active substance content of 20% by weight.
2. Products to be applied undiluted
   I Dusts (DP, DS)
      5 parts by weight of a compound used according to the invention are ground finely and mixed intimately with 95 parts by weight of finely divided kaolin. This gives a dustable product with an active substance content of 5% by weight.
   J Granules (GR, FG, GG, MG)
      0.5 part by weight of a compound used according to the invention is ground finely and associated with 99.5 parts by weight of carriers. Current methods are extrusion, spray-drying or the fluidized bed. This gives granules to be applied undiluted with an active substance content of 0.5% by weight.
   K ULV solutions (UL)
      10 parts by weight of a compound used according to the invention are dissolved in 90 parts by weight of an organic solvent, for example xylene. This gives a product to be applied undiluted with an active substance content of 10% by weight.

Formulations which are used for the treatment of seed are usually water-soluble concentrates (LS), suspensions (FS), dusts (DS), water-dispersible and water-soluble powders (WS, SS), emulsions (ES), emulsifiable concentrates (EC) and gel formulations (GF). These formulations can be applied to the seed in undiluted or, preferably, diluted form. Application can be effected prior to sowing.

It is preferred to use FS formulations for the treatment of seed. Usually, such formulations comprise 1 to 800 g/l active substance, 1 to 200 g/l surfactantss, 0 to 200 g/l antifreeze agents, 0 to 400 g/l binders, 0 to 200 g/l colorants and solvents, preferably water.

The active substances can be used as such, in the form of their formulations or the use forms prepared therefrom, e.g. in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; it is intended to ensure in each case the finest possible distribution of the active substances according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

Various types of oils, wetters, adjuvants, herbicides, fungicides, other pesticides, or bactericides may be added to the active substances, if appropriate just immediately prior to use (tank mix). These agents can be admixed with the agents according to the invention in a weight ratio of 1:100 to 100:1, preferably 1:10 to 10:1.

The active compounds used according to the invention can also be present together with other active substances, for example with herbicides, insecticides, growth regulators, fungicides or else with fertilizers. Mixing the respective active compounds, particularly the compounds of formula I, or the compositions comprising them with one or more further active substances, in particular fungicides, can frequently widen the spectrum of action or prevent the development of resistance. In many cases, synergistic effects result.

The following list of fungicides together with which the compounds that are suitable for being used in the inventive method can be used is intended to illustrate the possible combinations, but not to impose any limitation:
Carboxamides
   - carboxanilides: benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamide, tiadinil, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluoro-biphenyl-2-yl)-3-difluoromethyl-1-methylpyrazole-4-carboxamide, N'-(3',4'-dichloro-5-fluorobiphenyl-2-yl)-3-difluoromethyl-1-methylpyrazole-4-carboxamide, N-(2-cyanophenyl)-3,4-dichloroisothiazole-5-carboxamide;
   - carboxylic acid morpholides: dimethomorph, flumorph;
   - benzamides: flumetover, fluopicolide (picobenzamid), zoxamide;
   - other carboxamides: carpropamid, diclocymet, mandipropamid, N-(2-(4-[3-(4-chlorophenyl)prop-2-ynyloxy]-3-methoxyphenyl)ethyl)-2-methanesulfonylamino-3-methylbutyramide, N-(2-(4-[3-(4-chlorophenyl)prop-2-ynyloxy]-3-methoxyphenyl)-ethyl)-2-ethanesulfanylamino-3-methylbutyramide;
Azoles
   - triazoles: bitertanol, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, propiconazole, prothioconazole, simeconazole, tebuconazole, tetraconazole, triadimenol, triadimefon, triticonazole;
   - imidazoles: cyazofamid, imazalil, pefurazoate, prochloraz, triflumizole;
   - benzimidazoles: benomyl, carbendazim, fuberidazole, thiabendazole;
   - others: ethaboxam, etridiazole, hymexazole;
Nitrogenous heterocyclyl compounds
   - pyridines: fluazinam, pyrifenox, 3-[5-(4-chlorophenyl)-2,3-dimethylisoxazolidin-3-yl]pyridine;
   - pyrimidines: bupirimate, cyprodinil, ferimzone, fenarimol, mepanipyrim, nuarimol, pyrimethanil;
   - piperazines: triforine;
   - pyrroles: fludioxonil, fenpiclonil;
   - morpholines: aldimorph, dodemorph, fenpropimorph, tridemorph;
   - dicarboximides: iprodione, procymidone, vinclozolin;
   - others: acibenzolar-S-methyl, anilazine, captan, captafol, dazomet, diclomezine, fenoxanil, folpet, fenpropidin, famoxadone, fenamidone, octhilinone, probenazole, proquinazid, pyroquilon, quinoxyfen, tricyclazole, 5-chloro-7-(4-methylpiperidin-1-yl)-6-(2,4,6-trifluorophenyl)-[1,2,4]triazolo[1,5-a]pyrimidine, 2-butoxy-6-iodo-3-propylchromen-4-one, N,N-dimethyl-3-(3-bromo-6-fluoro-2-methylindole-1-sulfonyl)-[1,2,4]triazole-1-sulfonamide;
Carbamates and dithiocarbamates
   - dithiocarbamates: ferbam, mancozeb, maneb, metiram, metam, propineb, thiram, zineb, ziram;
   - carbamates: diethofencarb, flubenthiavalicarb, iprovalicarb, propamocarb, methyl 3-(4-chlorophenyl)-3-(2-isopropoxycarbonylamino-3-methylbutyrylamino)propionate, 4-fluorophenyl N-(1-(1-(4-cyanophenyl)ethanesulfonyl)but-2-yl)carbamate;
Other fungicides
   - guanidines: dodine, iminoctadine, guazatine;
   - antibiotics: kasugamycin, polyoxins, streptomycin, validamycin A;
   - organometal compounds: fentin salts;
   - sulfur-containing heterocyclyl compounds: isoprothiolane, dithianon;
   - organophosphorus compounds: edifenphos, fosetyl, fosetyl-aluminum, iprobenfos, pyrazophos, tolclofos-methyl, phosphorous acid and its salts;
   - organochlorine compounds: thiophanate methyl, chlorothalonil, dichlofluanid, tolylfluanid, flusulfamide, phthalide, hexachlorobenzene, pencycuron, quintozene;
   - nitrophenyl derivatives: binapacryl, dinocap, dinobuton;
   - inorganic active compounds: Bordeaux mixture, copper acetate, copper hydroxide, copper oxychloride, basic copper sulfate, sulfur;
   - others: spiroxamine, cyflufenamid, cymoxanil, metrafenone.

Thus, in a further embodiment of the invention, the active compound that inhibits the mitochondrial breathing chain at the level of the b/c₁ complex, in particular the compound of formula I, is used together with a further fungicidal compound, preferably one of the above-mentioned fungicides.

The present invention also provides a method of generating a plant, which is tolerant to harmful fungi, comprising the treatment of the plants, of the soil in which the plant is present, and/or of the seeds of the plant with an effective amount of a compound that inhibits the mitochondrial breathing chain at the level of the b/c₁ complex as defined herein. According to this method, the same preferred embodiments apply as detailed above.

Particularly preferably, in this method, the active compound is selected from pyraclostrobin, kresoxim methyl, dimoxystrobin, methyl 2-(ortho-((2,5-dimethylphenyloxymethylene)phenyl)-3-methoxyacrylate, picoxystrobin, trifloxystrobin, enestroburin, orysastrobin, metominostrobin, azoxystrobin and fluoxastrobin.

Furthermore, according to one embodiment, the plant is preferably a field crop. More preferred, the plant is cereal, in particular wheat.

According to another embodiment, the harmful fungus is Septoria spp., in particular Septoria tritici .

According to still another embodiment, the plant is a perennial plant, particularly a grapevine.

According to still another embodiment, the harmful fungi are Botrytis cinerea, Plasmopara viticola, Erysiphe necator and/or Esca.

According to another embodiment, the active compound, particularly the compound of formula I, is used together with a further fungicidal compound in order to generate a plant, which is tolerant to harmful fungi.

The examples which follow are intended to illustrate the invention, but without imposing any limitation.

### Example 1 (Comparative example, not forming part of the invention)

### 1.1 Experiment

Wheat seedlings at the 2 leaf stage were used in the study. Plants were grown singly in pots and were split into two batches. First leaves were sprayed with pyraclostrobin at the recommended rate (first leaves of controls were sprayed with distilled water) and the plants to be used for disease assessment were inoculated with S. tritici once leaves had dried. Both first and second leaves were inoculated by spraying with a spore suspension of 1 x 10⁵ spores / ml of distilled water containing a drop of Tween 20. Immediately after inoculation, pots were placed in water-saturated trays and covered with clear polyethene bags for 48 h. Thereafter plants were grown at 18 °C with 12 h /12 h light / dark alternation. Infection intensity was assessed 18 days after inoculation by estimating the % leaf area covered by symptoms.

### 1.2 Results

Pyraclostrobin applied to first leaves reduced S. tritici infection on both first and second leaves significantly compared to non treated controls (Table 1). Thus, after 18 days, the fungicide had reduced infection on first and second leaves by 65 % and 61 %, respectively (Table 1).

These data show that pyraclostrobin reduces S. tritici infection of first and second leaves of wheat seedlings by > 60 %. This is surprising since the isolate of S. tritici used in this study is resistant to pyraclostrobin.

**Table 1**

| Effect of treating first leaves of wheat seedlings with pyraclostrobin on S. tritici infection on first and second leaves | | |
|---|---|---|
| Treatment | Infection (% leaf area showing symptoms) | |
| | First leaf | Second leaf |
| Untreated | 48 ± 5.3 | 41 ± 5.2 |
| Pyraclostrobin | 17 ± 2.3 | 16 ± 1.4 |

Values represent the means ± SE of 10 replicates. Both treatments significant at P ≤ 0.01 (Students t-test).

Consequently, these data suggest that pyraclostrobin induces resistance in wheat to the pathogen Septoria tritici.

## Claims

1. A method of inducing the resistance of plants to harmful fungi, comprising the repeated treatment of the plants, of the soil, in which the plant is present or is to be present and/or the seeds of the plant with an effective amount of an active compound that inhibits the mitochondrial breathing chain at the level of the b/c₁ complex.

2. The method of claim 1, wherein the active compound is a strobilurin or an agriculturally acceptable salt thereof.

3. The method of claim 1 or 2, wherein the active compound is a compound of the formula I 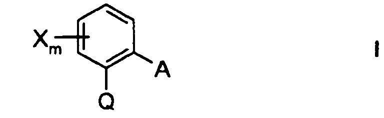 wherein the substituents and indices have the following meanings:
X denotes halogen, C₁-C₄-alkyl or trifluoromethyl;
m denotes 0 or 1;
Q denotes C(=CH-CH₃)-COOCH₃, C(=CH-OCH₃)-COOCH₃, C(=N-OCH₃)-CONHCH₃, C(=N-OCH₃)-COOCH₃, N(-OCH₃)-COOCH₃, or a group Q1 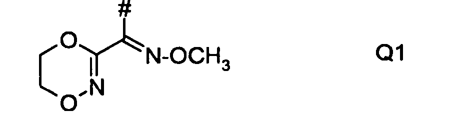
where # denotes the point of linkage to the phenyl ring;
A denotes -O-B, -CH₂O-B, -OCH₂-B, -CH₂S-B, -CH=CH-B, -C=C-B, -CH₂O-N=C(R¹)-B, -CH₂S-N=C(R¹)-B, -CH₂O-N=C(R¹)-CH=CH-B, or -CH₂O-N=C(R¹)-C(R²)=N-OR³; where B has the following meanings:
B denotes phenyl, naphthyl, 5- or 6-membered heteroaryl or 5- or 6-membered heterocyclyl, comprising one, two or three N atoms and/or one O or S atom or one or two O and/or S atoms, the ring systems being unsubstituted or substituted by one, two or three identical or different groups R^{a}:
R^{a} denotes cyano, nitro, amino, aminocarbonyl., aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylsulfinyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered heteroaryl, 5- or 6-membered heteroaryloxy, C(=NOR^{a})-R^{b} or OC(R^{a})₂-C(R^{b})=NOR^{b},
the cyclic radicals, in turn, being unsubstituted or substituted by one, two or three identical or different groups R^{b}:
R^{b} denotes cyano, nitro, halogen, amino, aminocarbonyl, amino-thiocarbonyl, C₁-C₆-alkyl, C₁-C₆-haloalkyl, C₁-C₆-alkylsulfonyl, C₁-C₆-alkylsulfinyl, C₃-C₆-cycloalkyl, C₁-C₆-alkoxy, C₁-C₆-halo-alkoxy, C₁-C₆-alkoxycarbonyl, C₁-C₆-alkylthio, C₁-C₅-alkylamino, di-C₁-C₆-alkylamino, C₁-C₆-alkylaminocarbonyl, di-C₁-C₆-alkyl-aminocarbonyl, C₁-C₆-alkylaminothiocarbonyl, di-C₁-C₆-alkyl-aminothiocarbonyl, C₂-C₆-alkenyl, C₂-C₆-alkenyloxy, C₃-C₆-cycloalkyl, C₃-C₅-cycloalkenyl, phenyl, phenoxy, phenylthio, benzyl, benzyloxy, 5- or 6-membered heterocyclyl, 5- or 6-membered heteroaryl, 5- or 6-membered heteroaryloxy or C(=NOR^{A})-R^{B}; where
R^{A}, R^{B} denote hydrogen or C₁-C₆-alkyl;
R¹ denotes hydrogen, cyano, C₁-C₄-alkyl, C₁-C₄-haloalkyl, C₃-C₆-Cycloalkyl, C₁-C₄-alkoxy, or C₁-C₄-alkylthio;
R² denotes phenyl, phenylcarbonyl, phenylsulfonyl, 5- or 6-membered heteroaryl, 5- or 6-membered heteroarylcarbonyl or 5- or 6-membered heteroarylsulfonyl, the ring systems being unsubstituted or substituted by one, two or three identical or different radicals R^{a},
C₁-C₁₀-alkyl, C₃-C₆-cycloalkyl, C₂-C₁₀-alkenyl, C₂-C₁₀-alkynyl, C₁-C₁₀-alkyl-carbonyl, C₂-C₁₀-alkenylcarbonyl, C₃-C₁₀-alkynylcarbonyl, C₁-C₁₀-alkyl-sulfonyl, or C(=NOR^{A})-R^{B}, the hydrocarbon radicals of these groups being unsubstituted or substituted by one, two or three identical or different radicals R^{c}:
R^{c} denotes cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkyl-sulfinyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylamino-carbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy,
C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered heteroaryl, 5- or 6-membered heteroaryloxy and heteroarylthio, it being possible for the cyclic groups, in turn, to be partially or fully halogenated and/or to have attached to them one, two or three identical or different radicals R^{a}; and
R³ denotes hydrogen, C₁-C₆-alkyl, C₂-C₆-alkenyl, C₂-C₆-alkynyl, the hydrocarbon radicals of these groups being unsubstituted or substituted by one, two or three identical or different radicals R^{c}
or an agriculturally acceptable salt thereof; or
a strobilurin compound selected from the group consisting of methyl (2-chloro-5-[1-(3-methylbenzyloxyimino)ethyl]benzyl)carbamate and methyl (2-chloro-5-[1-(6-methylpyridin-2-ylmethoxyimino)ethyl]benzyl)carbamate or agriculturally acceptable salts of these strobilurin compounds.

4. The method according to claim 3, wherein the index m in formula ! denotes zero and the substituents have the following meanings:
Q denotes C(=CH-CH₃)-COOCH₃, C(=CH-OCH₃)-COOCH₃, C(=N-OCH₃)-CONHCH₃, C(=N-OCH₃)-COOCH₃ or N(-OCH₃)-COOCH₃;
A denotes -O-B, -CH₂O-B, -OCH₂-B, -CH₂O-N=C(R¹)-B or -CH₂O-N=C(R¹)-C(R²)=N-OR³, where
B denotes phenyl, pyridyl, pyrimidyl, pyrazolyl, triazolyl, these rings being unsubstituted or substituted by one, two or three identical or different radicals R^{a};
R¹ denotes hydrogen, cyano, C₁-C₄-alkyl, C₁-C₄-haloalkyl, C₃-C₆-cycloalkyl or C₁-C₄-alkoxy;
R² denotes C₁-C₆-alkyl, C₂-C₁₀-alkenyl, C₃-C₆-cycloalkyl, these groups being unsubstituted or substituted by one or two identical or different radicals R^{b}:
R^{b'} denotes C₁-C₆-alkyl, C₃-C₆-cycloalkyl, C₁-C₆-alkoxy, C₁-C₆-haloalkoxy, benzyl, phenyl or phenoxy;
phenyl which is unsubstituted or substituted by one or two identical or different R^{a}; and
R³ denotes C₁-C₆-alkyl, C₂-C₆-alkenyl, or C₂-C₆-alkynyl.

5. The method according to claim 3, wherein an active substance of the formula II, 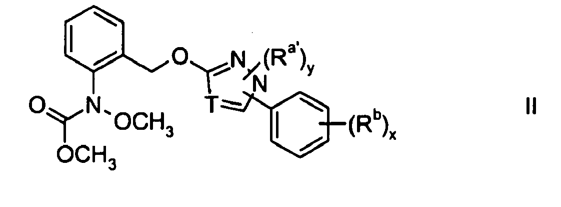
T denotes a carbon or nitrogen atom,
R^{a'} is selected from the series consisting of halogen, methyl and trifluoromethyl,
y represents zero, 1 or 2,
R^{b} is as defined for formula I in claim 1; and
x represents zero, 1, 2, 3 or 4
is used.

6. The method according to claim 3, wherein an active substance of the formula III, 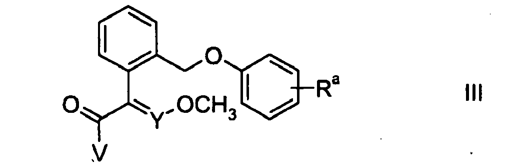 in which
R^{a} denotes one or two identical or different groups selected from the series consisting of halogen, C₁-C₆-alkyl, C₁-C₆-alkoxy, halomethyl, halomethoxy, methyl and trifluoromethyl, the groups R^{a} being unsubstituted or substituted by a C₁-C₆-alkoxyimino group;
V denotes OCH₃, or NHCH₃; and
Y denotes CH or N
is used.

7. The method according to claim 3, wherein the compound of the formula I is selected from the group consisting of pyraclostrobin, kresoxim methyl, dimoxystrobin, methyl 2-(ortho-((2,5-dimethylphenyloxymethylene)phenyl)-3-methoxyacrylate, picoxystrobin, trifloxystrobin, enestroburin, orysastrobin, metominostrobin, azoxystrobin and fluoxastrobin.

8. The method according to claim 3, wherein the compound of the formula I is selected from the group consisting of azoxystrobin, pyraclostrobin and picoxystrobin.

9. The method according to claim 3, wherein the compound of the formula I is pyraclostrobin.

10. The method according to any one of the preceding claims, wherein the application of the active compound is carried out during the first six weeks of the vegetation period of the plants or after emergence of the plants.

11. The method according to any one of the preceding claims, wherein a repeated application of the active compound is carried out every 10 to 20 days.

12. The method according to any one of the preceding claims, wherein two to ten applications of the active compound are carried out over one season.

13. The method according to any one of the preceding claims, which is carried out as a foliar application.

14. The method according to any one of the preceding claims, which is carried out on vegetables or field crops.

15. The method according to any one of the preceding claims, which is carried out or soybeans, maize, cotton, tobacco, french beans, wheat, rye and peas.

16. The method according to any one of claims 1 to 14, which is carried out on cereals.

17. The method according to claim 16, which is carried out on wheat.

18. The method according to claim 17, wherein a tolerance to *Septoria spp*. is induced in the plants.

19. The method according to claim 18, wherein a tolerance to *Septoria tritici* is induced in the plants.

20. The method according to any one of claims 1 to 13, which is carried out on perennial plants.

21. The method according to claim 20, which is carried out on grapevines.

22. The method according claim 21, wherein a resistance to *Botrytis cinerea, Plasmopara viticola, Erysiphe necator* and/or *Esca* is induced in the plants.

23. The method according to any one of the preceding claims wherein the active compound is used together with a further fungicidal compound.

## Patentansprüche

1. Verfahren zum Induzieren von Resistenz von Pflanzen gegen Schadpilze, umfassend die wiederholte Behandlung der Pflanzen, des Bodens, in dem die Pflanze vorliegt oder vorliegen soll, und/oder der Samen der Pflanze mit einer wirksamen Menge eines Wirkstoffs, der die Mitochondrien-Atmungskette auf der Stufe des b/c₁-Komplexes hemmt.

2. Verfahren nach Anspruch 1, wobei es sich bei dem Wirkstoff um ein Strobilurin oder ein landwirtschaftlich annehmbares Salz davon handelt.

3. Verfahren nach Anspruch 1 oder 2, wobei es sich bei dem Wirkstoff um eine Verbindung der Formel I 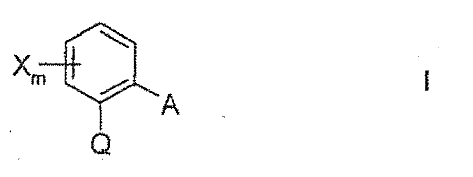 handelt, worin die Substituenten und Indices bedeuten:
X Halogen, C₁-C₄-Alkyl oder Trifluormethyl;
m 0 oder 1;
Q C (=CH-CH₃) -COOCH₃, C(=CH-OCH₃)-COOCH₃, C-(=N-OCH₃)-CONHCH₃ , C(=N-OCH₃)-COOCH₃, N(-OCH₃)-COOCH, oder eine Gruppe Q1 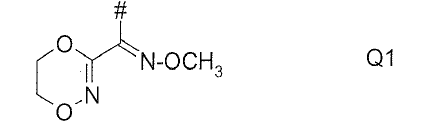 worin # die Verknüpfungsstelle mit dem Phenylring bedeutet;
A -O-B, -CH₂O-B, -OCH₂-B, -CH₂S-B, -CH=CH-B, -C≡C-B,-CH₂O-N=C(R¹)-B, -CH₂S-N=C(R¹)-B, -CH₂O-N=C(R¹)-CH=CH-B, oder -CH₂O-N=C(R¹)-C(R²)=N-OR³, wobei B bedeutet:
B Phenyl, Naphthyl, 5- oder 6-gliedriges Heteroaryl oder 5- oder 6-gliedriges Heterocyclyl, enthaltend ein, zwei oder drei N-Atome und/oder ein O- oder S-Atom oder ein oder zwei O- und/oder S-Atome, wobei die Ringsysteme unsubstituiert oder substituiert sind mit einer, zwei oder drei gleichen oder verschiedenen Gruppen R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfinyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylamino-carbonyl, C₁-C₆-Alkylaminothiocarbonyl, Di-C₁-C₆-alkylaminothiocarbonyl, C₂-C₆-Alkenyl, C₂-C₆-Alkerlyloxy, Phenyl, Phenoxy, Benzyl, Benzyloxy, 5- oder 6-gliedriges Heterocyclyl, 5- oder 6-gliedriges Heteroaryl, 5- oder 6-gliedriges Heteroaryloxy, C(=NOR^{a})-R^{b} oder OC(R^{a})₂-C(R^{b})=NOR^{b},
wobei die cyclischen Reste ihrerseits unsubstituiert oder substituiert sind mit einer, zwei oder drei gleichen oder verschiedenen Gruppen R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfinyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylamino-carbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5-oder 6-gliedriges Heteroaryl, 5- oder 6-gliedriges Heteroaryloxy oder C(=NOR^{A})-R^{B}; wobei
R^{A}, R^{B} Wasserstoff oder C₁-C₆-Alkyl bedeuten;
R¹ Wasserstoff, Cyano, C₁-C₄-Alkyl, C₁-C₄-Halogenalkyl, C₃-C₆-Cycloalkyl, C₁-C₄-Alkoxy, oder C₁-C₄-Alkylthio;
R² Phenyl, Phenylcarbonyl, Phenylsulfonyl, 5- oder 6-gliedriges Heteroaryl, 5- oder 6-gliedriges Heteroarylcarbonyl oder 5- oder 6-gliedriges Heteroarylsulfonyl, wobei die Ringsysteme unsubstituiert oder substituiert sind mit einem, zwei oder drei gleichen oder verschiedenen Resten R^{a},
C₁-C₁₀-Alkyl, C₃-C₆-Cycloalkyl, C₂-C₁₀-Alkenyl, C₂-C₁₀-Alkynyl, C₁-C₁₀-Alkylcarbonyl, C₂-C₁₀-Alkenylcarbonyl, C₃-C₁₀-Alkynylcarbonyl, C₁-C₁₀-Alkylsulfonyl, oder C(=NOR^{A})-R^{B}, wobei die Kohlenwasserstoffreste dieser Gruppen unsubstituiert sind oder substituiert sind mit einem, zwei oder drei gleichen oder verschiedenen Resten R^{C}:
R^{C} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfinyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylamino-thiocarbonyl, C₂-C₆-Alkenyl, C₂-C₆-Alkenyloxy,
C₃-C₆-Cycloalkyl, C₃-C₆-Cycloalkyloxy, 5-oder 6-gliedriges Heterocyclyl, 5- oder 6-gliedriges Heterocyclyloxy, Benzyl, Benzyloxy, Phenyl, Phenoxy, Phenylthio, 5-oder 6-gliedriges Heteroaryl, 5- oder 6-gliedriges Heteroaryloxy und Heteroarylthio, wobei die cyclischen Gruppen ihrerseits teilweise oder vollständig halogeniert sein können und/oder einen, zwei oder drei gleiche oder verschiedene Reste R^{a} tragen können; und
R³ Wasserstoff, C₁-C₆-Alkyl, C₂-C₆-Alkenyl, C₂-C₆-Alkynyl, wobei die Kohlenwasserstoffreste dieser Gruppen unsubstituiert oder substituiert sind mit einem, zwei oder drei gleichen oder verschiedenen Resten R^{C};
oder ein landwirtschaftlich annehmbares Salz davon; und
die Strobilurinverbindungen aus der Reihe Methyl-(2-chlor-5-[1-(3-methylbenzyloxyimino)ethyl]-benzyl)carbamat und Methyl-(2-chlor-5-[1-(6-methylpyridin-2-ylmethoxyimino)ethyl]benzyl)carbamat und die landwirtschaftlich annehmbaren Salze davon.

4. Verfahren nach Anspruch 3, wobei der Index m in Formel I null bedeutet und die Substituenten die folgenden Bedeutungen aufweisen:
Q bedeutet C(=CH-CH₃)-COOCH₃, C(=CH-OCH₃)-COOCH₃, C(=N-OCH₃)-CONHCH₃, C(=N-OCH₃)-COOCH₃ oder N(-OCH₃)-COOCH₃ ;
A bedeutet -O-B, -CH₂O-B, -OCH₂-B, -CH₂O-N=C(R¹)-B oder -CH₂O-N=C(R¹)-C(R²)=N-OR³, wobei
B Phenyl, Pyridyl, Pyrimidyl, Pyrazolyl, Triazolyl bedeutet, wobei diese Ringe unsubstituiert oder durch einen, zwei oder drei identische oder verschiedene Reste R^{a} substituiert sind;
R¹ Wasserstoff, Cyano, C₁-C₄-Alkyl, C₁-C₄-Halogenalkyl, C₃-C₆-Cycloalkyl oder C₁-C₄-Alkoxy bedeutet;
R² C₁-C₆-Alkyl, C₂-C₁₀-Alkenyl, C₃-C₆-Cycloalkyl bedeutet, wobei diese Gruppen unsubstituiert oder durch einen oder zwei identische oder verschiedene Reste R^{b'} substituiert sind:
R^{b'} bedeutet C₁-C₆-Alkyl, C₃-C₆-Cycloalkyl, C₁-C₆-Alkoxy, C₁-C₆-Halogenoxy, Benzyl, Phenyl oder Phenoxy;
Phenyl, das unsubstituiert oder durch ein oder zwei identische oder verschiedene R^{a} substituiert ist; und
R³ bedeutet C₁-C₆-Alkyl, C₂-C₆-Alkenyl oder C₂-C₆-Alkinyl.

5. Verfahren nach Anspruch 3, wobei ein Wirkstoff der Formel II, 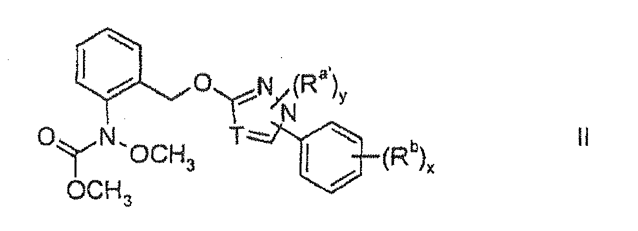 in der
T ein Kohlenstoff- oder Stickstoffatom bedeutet,
R^{q'} aus der Reihe Halogen, Methyl und Trifluormethyl stammt,
y null, 1 oder 2 bedeutet,
R^{b} wie für Formel I in Anspruch 1 definiert ist; und
x null, 1, 2, 3 oder 4 bedeutet,
verwendet wird.

6. Verfahren nach Anspruch 3, wobei ein Wirkstoff der Formel III, 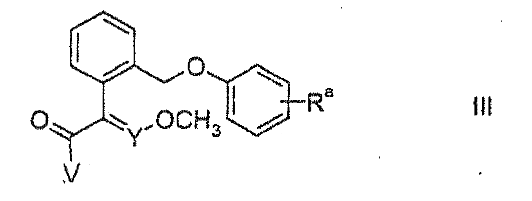 in der
R^{a} eine oder zwei gleiche oder verschiedene Gruppen aus der Reihe Halogen, C₁-C₆-Alkyl, C₁-C₆-Alkoxy, Halogenmethyl, Halogenmethoxy, Methyl und Trifluormethyl bedeutet, wobei die Gruppen R^{a} unsubstituiert oder durch eine C₁-C₆-Alkoxyiminogruppe
substituiert sind;
V OCH₃ oder NHCH₃ bedeutet; und
Y CH oder N bedeutet,
verwendet wird.

7. Verfahren nach Anspruch 3, wobei die Verbindung der Formel I aus der Gruppe Pyraclostrobiin, Kresoxim-Methyl, Dimoxystrobin, Methyl-2-(ortho-((2,5-dimethylphenyloxymethylen)phenyl)-3-methoxyacrylat, Picoxystrobin, Trifloxystrobin, Enestroburin, Orysastrobin, Metominostrobin, Azoxystrobin und Fluoxastrobin stammt.

8. Verfahren nach Anspruch 3, wobei die Verbindung der Formel I aus der Gruppe Azoxystrobin, Pyraclostrobin und Picoxystrobin stammt.

9. Verfahren nach Anspruch 3, wobei es sich bei der Verbindung der Formel I um Pyraclostrobin handelt.

10. Verfahren nach einem der vorhergehenden Ansprüche, wobei die Anwendung des Wirkstoffs während der ersten 6 Wochen der Wachstumsperiode der Pflanzen oder nach dem Auflaufen der Pflanzen vorgenommen wird.

11. Verfahren nach einem der vorhergehenden Ansprüche, wobei eine wiederholte Anwendung des Wirkstoffs alle 10 bis 20 Tage erfolgt.

12. Verfahren nach einem der vorhergehenden Ansprüche, wobei zwei bis zehn Anwendungen des Wirkstoffs über eine Saison hinweg erfolgen.

13. Verfahren nach einem der vorhergehenden Ansprüche, welches als Blattanwendung durchgeführt wird.

14. Verfahren nach einem der vorhergehenden Ansprüche, welches bei Gemüse oder Feldfrüchten durchgeführt wird.

15. Verfahren nach einem der vorhergehenden Ansprüche, welches bei Soja, Mais, Baumwolle, Tabak, Gartenbohne, Weizen, Roggen und Erbsen angewandt wird.

16. Verfahren nach einem der Ansprüche 1 bis 14, welches bei Getreide durchgeführt wird.

17. Verfahren nach Anspruch 16, welches bei Weizen durchgeführt wird.

18. Verfahren nach Anspruch 17, wobei bei den Pflanzen eine Toleranz gegenüber *Septoria spp*. induziert wird.

19. Verfahren nach Anspruch 18, wobei bei den Pflanzen eine Toleranz gegenüber *Septoria tritici* induziert wird.

20. Verfahren nach einem der Ansprüche 1 bis 13, welches bei mehrjährigen Pflanzen durchgeführt wird.

21. Verfahren nach Anspruch 20, welches an Weinreben durchgeführt wird.

22. Verfahren nach Anspruch 21, wobei in den Pflanzen eine Resistenz gegen *Botrytis cinerea, Plasmopara viticola, Erysiphe necator* und/oder Esca-Krankheit induziert wird.

23. Verfahren nach einem der vorhergehenden Ansprüche, wobei der Wirkstoff gemeinsam mit einer weiteren fungiziden Verbindung eingesetzt wird.

## Revendications

1. Méthode d'induction de la résistance de plantes vis-à-vis de champignons nuisibles, comprenant le traitement répété des plantes, du sol dans lequel la plante est présente ou doit être présente et/ou des graines de la plante, par une quantité efficace d'un composé actif qui inhibe la chaîne respiratoire mitochondriale au niveau du complexe b/c₁.

2. Méthode selon la revendication 1, dans laquelle le composé actif est une strobilurine ou un sel de celui-ci acceptable sur le plan agricole.

3. Méthode selon la revendication 1 ou 2, dans laquelle le composé actif est un composé de formule I 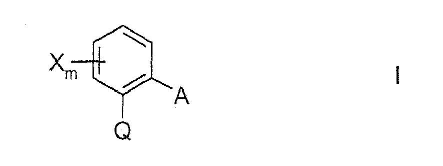 dans laquelle les substituants et indices ont les significations suivantes :
X désigne halogène, C₁-C₄-alkyle ou trifluorométhyle ;
m désigne 0 ou 1 ;
Q désigne C(=CH-CH₃)-COOCH₃, C(=CH-OCH₃)-COOCH₃, C(=N-OCH₃)-CONHCH_{3,} C(=N-OCH₃)-COOCH₃, N(-OCH₃)-COOCH₃, ou un groupement Q1 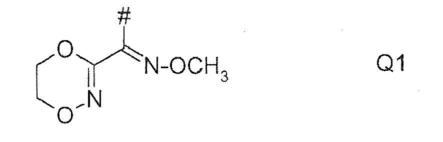 où # désigne le point de liaison au cycle phényle ;
A désigne -O-B, -CH₂O-B, -OCH₂-B, -CH₂S-B, -CH=CH-B, -C≡C-B, -CH₂O-N=C(R¹) -B, -CH₂S-N=C(R¹)-B, -CH₂O-N=C(R¹)-CH=CH-B, ou -CH₂O-N=C(R¹)-C(R²)=N-OR³ ; où B revêt les significations suivantes :
B désigne phényle, naphtyle, hétéroaryle de 5 ou 6 chaînons ou hétérocyclyle de 5 ou 6 chaînons, comprenant un, deux ou trois atomes de N et/ou un atome de O ou S ou un ou deux atomes de O et/ou S, les noyaux étant non substitués ou substitués par un, deux ou trois groupements R^{a} identiques ou différents :
R^{a} désigne cyano, nitro, amino, aminocarbonyle, aminothiocarbonyle, halogène, C₁-C₆-alkyle, C₁-C₆-halogénoalkyle, C₁-C₆-alkylcarbonyle, C₁-C₆-alkyl-sulfonyle, C₁-C₆- alkylsulfinyle, C₃-C₆-cycloalkyle, C₁-C₆-alcoxy, C₁-C₆-halogénoalcoxy, C₁-C₆-alkyloxycarbonyle, C₁-C₆-alkylthio, C₁-C₆-alkylamino, di-C₁-C₆-alkylamino, C₁-C₆-alkylaminocarbonyle, di-C₁-C₆- alkylaminocarbonyle, C₁-C₆-alkylaminothiocarbonyle, di-C₁-C₆-alkylaminothi-o-carbonyle, C₂-C₆-alcényle, C₂-C₆-alcényloxy, phényle, phénoxy, benzyle, benzyloxy, hétérocyclyle de 5 ou 6 chaînons, hétéroaryle de 5 ou 6 chaînons, hétéroaryloxy de 5 ou 6 chaînons, C(=NOR^{a})-Rb ou OC(R^{a})₂-C(R^{b})=NOR^{b},
les radicaux cycliques, à leur tour, étant non substitués ou substitués par un, deux ou trois groupements R^{b} identiques ou différents :
R^{b} désigne cyano, nitro, halogène, amino, aminocarbonyle, aminothiocarbonyle, C₁-C₆alkyle, C₁-C₆-halogénoalkyle, C₁-C₆-alkylsulfonyle, C₁-C₆-alkylsulfinyle, C₃-C₆-cycloalkyle, C₁-C₆-alcoxy, C₁-C₆-halogénoalcoxy, C₁-C₆-alcoxycarbonyle, C₁-C₆-alkylthio, C₁-C₆-alkylamino, di-C₁-C₆-alkylamino, C₁-C₆-alkylaminocarbonyle, di-C₁-C₆-alkylaminocarbonyle, C₁-C₆-alkyl-aminothiocarbonyle, di-C₁-C₆-alkylaminothiocarbonyle, C₂-C₆-alcényle, C₂-C₆-alcényloxy, C₃-C₆-cycloalkyle, C₃-C₆-cycloalcényle, phényle, phénoxy, phénylthio, benzyle, benzyloxy, hétérocyclyle de 5 ou 6 chaînons, hétéroaryle de 5 ou 6 chaînons, hétéroaryloxy de 5 ou 6 chaînons ou C(=NOR^{A})-R^{B} ; où
R^{A}, R^{B} désignent hydrogène ou C₁-C₆-alkyle ;
R¹ désigne hydrogène, cyano, C₁-C₄-alkyle, C₁-C₄-halogénoalkyle, C₃-C₆-Cycloalkyle, C₁-C₄-alcoxy, ou C₁-C₄-alkylthio ;
R² désigne phényle, phénylcarbonyle, phénylsulfonyle, hétéroaryle de 5 ou 6 chaînons, hétéroarylcarbonyle de 5 ou 6 chaînons ou hétéroarylsulfonyle de 5 ou 6 chaînons, les noyaux étant non substitués ou substitués par un, deux ou trois radicaux R^{a} identiques ou différents,
C₁-C₁₀-alkyle, C₃-C₆-cycloalkyle, C₂-C₁₀-alcényle, C₂-C₁₀-alcynyle, C₁-C₁₀-alkylcarbonyle, C₂-C₁₀-alcénylcarbonyle, C₂-C₁₀-alcynylcarbonyle, C₁-C₁₀-alkylsulfonyle, ou C(=NOR^{A})-R^{B}, les radicaux hydrocarbonés de ces groupements étant non substitués ou substitués par un, deux ou trois radicaux R^{C} identiques ou différents :
R^{C} désigne cyano, nitro, amino, aminocarbonyle, aminothiocarbonyle, halogène, C₁-C₆-alkyle, C₁-C₆-halogénoalkyle, C₁-C₆-alkylsulfonyle, C₁-C₆-alkylsulfinyle, C₁-C₆-alcoxy, C₁-C₆-halogénoalcoxy, C₁-C₆-alcoxycarbonyle, C₁-C₆-alkylthio, C₁-C₆-alkylamino, di-C₁-C₆-alkylamino, C₁-C₆-alkylaminocarbonyle, di-C₁-C₆-alkylaminocarbonyle, C₁-C₆-alkylaminothiocarbonyle, di-C₁-C₆-alkylaminothiocarbonyle, C₂-C₆-alcényle, C₂-C₆-alcényloxy, C₃-C₆-cycloalkyle, C₃-C₆-cycloalkyloxy, hétérocyclyle de 5 ou 6 chaînons, hétérocyclyloxy de 5 ou 6 chaînons, benzyle, benzyloxy, phényle, phénoxy, phénylthio, hétéroaryle de 5 ou 6 chaînons, hétéroaryloxy de 5 ou 6 chaînons et hétéroarylthio, les groupements cycliques pouvant à leur tour être partiellement ou totalement halogénés et/ou avoir, fixés sur eux, un, deux ou trois radicaux R^{a} identiques ou différents ; et
R³ désigne hydrogène, C₁-C₆-alkyle, C₂-C₆-alcényle, C₂-C₆-alcynyle, les radicaux hydrocarbonés de ces groupements étant non substitués ou substitués par un, deux ou trois radicaux R^{C} identiques ou différents
ou un sel de celui-ci acceptable sur le plan agricole ; ou
un composé de strobilurine choisi parmi le groupe constitué par le (2-chloro-5-[1-(3-méthylbenzyloxy-imino)éthyl]benzyl)carbamate de méthyle et le (2-chloro-5-[1-(6-méthylpyridin-2-ylméthoxyimino)éthyl]-benzyl)carbamate de méthyle ou des sels acceptables sur le plan agricole de ces composés de strobilurine.

4. Méthode selon la revendication 3, dans laquelle l'indice m dans la formule I désigne zéro et les substituant ont les significations suivantes :
Q désigne C(=CH-CH₃)-COOCH₃, C-(=CH-OCH₃)-OOCH₃, C(=N-OCH₃)-CONHCH₃, C(=N-OCH₃)-COOCH₃ ou N(-OCH₃)-COOCH₃ ;
A désigne -O-B, -CH₂O-B, -OCH₂-B, -CH₂O-N=C(R¹)-B ou -CH₂O-N=C(R¹)-C(R²)=N-OR³, où
B désigne phényle, pyridyle, pyrimidyle, pyrazolyle, triazolyle, ces cycles étant non substitués ou substitués par un, deux ou trois radicaux R^{a} identiques ou différents ;
R¹ désigne hydrogène, cyano, C₁-C₄-alkyle, C₁-C₄-halogénoalkyle, C₃-C₆-cycloalkyle ou C₁-C₄-alcoxy ;
R² désigne C₁-C₆-alkyle, C₂-C₁₀-alcényle, C₃-C₆-cycloalkyle, ces groupements étant non substitués ou substitués par un ou deux radicaux identiques ou différents R^{b'} :
R^{b'} désigne C₁-C₆-alkyle, C₃-C₆-cycloalkyle, C₁-C₆-alcoxy, C₁-C₆-halogénoalcoxy, benzyle, phényle ou phénoxy ; phényle qui est non substitué ou substitué par un ou deux radicaux R^{a} identiques ou différents ; et
R³ désigne C₁-C₆-alkyle, C₂-C₆-alcényle, ou C₂-C₆-alcynyle.

5. Méthode selon la revendication 3, dans laquelle on utilise une substance active de formule II, 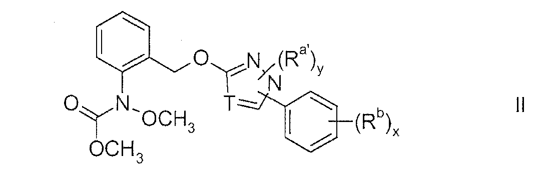 dans laquelle
T désigne un atome de carbone ou d'azote,
R^{a'} est choisi parmi le groupe constitué par halogène, méthyle et trifluorométhyle,
y représente zéro, 1 ou 2,
R^{b} est tel que défini pour la formule I selon la revendication 1 ; et
x représente zéro, 1, 2, 3 ou 4.

6. Méthode selon la revendication 3, dans laquelle on utilise une substance active de formule III, 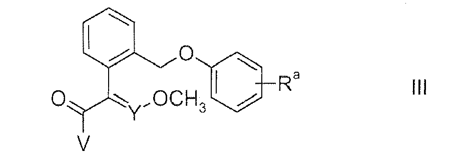 dans laquelle
R^{a} désigne un ou deux groupements identiques ou différents choisis parmi le groupe constitué par halogène, C₁-C₆-alkyle, C₁-C₆-alcoxy, halogénométhyle, halogénométhoxy, méthyle et trifluorométhyle, les groupements R^{a} étant non substitués ou substitués par un groupement C₁-C₆-alcoxyimino ;
V désigne OCH₃, ou NHCH₃ ; et
Y désigne CH ou N.

7. Méthode selon la revendication 3, dans laquelle le composé de formule I est choisi parmi le groupe constitué par la pyraclostrobine, le krésoxime-méthyle, la dimoxystrobine, le 2-(ortho-((2,5-diméthylphényloxy-méthylène)phényl)-3-méthoxyacrylate de méthyle, la picoxystrobine, la trifloxystrobine, l'énestroburine, l'orysastrobine, la métominostrobine, l'azoxystrobine et la fluoxastrobine.

8. Méthode selon la revendication 3, dans laquelle le composé de formule I est choisi parmi le groupe constitué par l'azoxystrobine, la pyraclostrobine et la picoxystrobine.

9. Méthode selon la revendication 3, dans laquelle le composé de formule I est la pyraclostrobine.

10. Méthode selon l'une quelconque des revendications précédentes, dans laquelle l'application du composé actif est effectuée pendant les six premières semaines de la période de végétation des plantes ou après émergence des plantes.

11. Méthode selon l'une quelconque des revendications précédentes, dans laquelle une application répétée du composé actif est effectuée tous les 10 à 20 jours.

12. Méthode selon l'une quelconque des revendications précédentes, dans laquelle de deux à dix applications du composé actif sont effectuées au cours d'une saison.

13. Méthode selon l'une quelconque des revendications précédentes, qui est effectuée sous forme d'application foliaire.

14. Méthode selon l'une quelconque des revendications précédentes, qui est effectuée sur des légumes ou des cultures de plein champ.

15. Méthode selon l'une quelconque des revendications précédentes, qui est effectuée sur du soja, du maïs, du coton, du tabac, des haricots verts, du blé, du seigle et des pois.

16. Méthode selon l'une quelconque des revendications 1 à 14, qui est effectuée sur des céréales.

17. Méthode selon la revendication 16, qui est effectuée sur du blé.

18. Méthode selon la revendication 17, dans laquelle on induit une tolérance aux *Septoria* spp. chez les plantes.

19. Méthode selon la revendication 18, dans laquelle on induit une tolérance à *Septoria tritici* chez les plantes.

20. Méthode selon l'une quelconque des revendications 1 à 13, qui est effectuée sur des plantes vivaces.

21. Méthode selon la revendication 20, qui est effectuée sur des vignes.

22. Méthode selon la revendication 21, dans laquelle on induit une tolérance à *Botrytis cinerea, Plasmopara viticola, Erysiphe necator* et/ou *Esca* chez les plantes.

23. Méthode selon l'une quelconque des revendications précédentes dans laquelle le composé actif est utilisé conjointement avec un autre composé fongicide.
